# FASCICULE DE BREVET EUROPEEN

(11) **EP 2 867 176 B1**
(45) Date de publication et mention de la délivrance du brevet: **05.08.2020**
(21) Numéro de dépôt: 13762239.5
(22) Date de dépôt: 28.06.2013
(51) Int. Cl.: C02F 11/06, F26B 3/08, C02F 11/18, C02F 1/74, C02F 1/00

(54) **PROCEDE ET INSTALLATION DE TRAITEMENT DE BOUES SECHEES DE STATION D'EPURATION POUR EVITER OU LIMITER LEUR AUTO-ECHAUFFEMENT**
VERFAHREN UND ANLAGE ZUR BEHANDLUNG VON GETROCKNETEM SCHLAMM AUS EINER KLÄRANLAGE ZUR VERHINDERUNG ODER BEGRENZUNG DER SELBSTERWÄRMUNG DAVON
METHOD AND INSTALLATION FOR THE TREATMENT OF DRIED SLUDGE FROM A SEWAGE TREATMENT PLANT IN ORDER TO PREVENT OR LIMIT THE SELF-HEATING OF SAME

(30) Priorité: 29.06.2012 FR 1256253
(43) Date de publication de la demande: 06.05.2015
(73) Titulaire: Degrémont, 92040 Paris La Défense (FR)
(72) Inventeur: PARDO, Pierre Emmanuel, F-91400 Orsay (FR); MORICE, Ludovic, F-60240 Chaumont En Vexin (FR)
(74) Mandataire: IPAZ
(86) Numéro de dépôt international: PCT/IB2013/055314
(87) Numéro de publication internationale: WO 2014/002063

(56) Documents cités:
- EP-A1- 1 209 127
- WO-A1-00/14186
- WO-A2-2008/106672
- DE-A1- 4 242 747
- DE-A1-102009 051 224
- DE-C1- 19 548 494
- GB-A- 1 378 489
- US-A- 4 881 473

## Description

L'invention est relative à un procédé de traitement de boues séchées de station d'épuration, pour éviter ou limiter leur auto-échauffement lors d'un stockage ultérieur.

Les procédés de traitement des eaux résiduaires produisent, à chaque étape, des boues qui selon leur destination peuvent être déshydratées puis séchées. Dans les deux cas, l'objectif est la réduction du volume de boues afin de permettre leur valorisation ou de limiter le coût de destruction.

Dans le cas du séchage des boues, le produit solide obtenu, qui est composé d'une partie organique combustible et d'une partie minérale, ne contient plus que de 5 à 8 % d'eau en masse. Débarrassée de la plus grande partie de son eau, la boue devient un combustible sec au PCI (Pouvoir Calorifique Inférieur) de 12 000 à 18 000 kJ/kg avec un début de dévolatilisation vers 140-250°C s'accompagnant d'un fort dégagement de chaleur permettant d'atteindre la température de combustion de la matière volatile donnant naissance à un feu couvant accompagné de substances toxiques, ce qui correspond à la température d'auto-inflammation. On rappelle que la dévolatilisation d'un combustible désigne le processus par lequel, au cours d'un traitement thermique, le combustible perd ses matières volatiles (eau, matières hydrocarbonées, oxyde de carbone, hydrogène).

Le début de dévolatilisation est observé lors du stockage en silo ou casier, ou lors du transport des boues, opérations pour lesquelles les boues sont pourtant à une température de l'ordre de 40°C à 60°C, bien inférieure à la température de dévolatilisation. La littérature décrit ce phénomène comme un auto-échauffement de la boue se déroulant selon les deux phases suivantes :
- à basse température, c'est-à-dire à une température inférieure à 80°C (T < 80°C), des réactions chimiques exothermiques se déroulent dans la matrice minérale élevant localement la température de la boue et produisant une structure catalytique permettant l'oxydation à basse température de la matière organique ;
- à partir de 80°C, la réaction d'oxydation de la matière organique très exothermique élève la température de la boue jusqu'à son point de dévolatilisation marquant le début d'un feu couvant avec possible incendie.

Les exemples de départ de feu lors des manipulations des boues séchées sont relativement nombreux, ce qui limite le temps de stockage des boues et nécessite la prise de précautions particulières pour leur transport et leur valorisation.

Les augmentations de température constatées dans les silos de stockage de granulés secs de boues d'épuration sont la conséquence d'une cascade de réactions chimiques qui apparaissent comme étant initiées en premier lieu par l'oxydation du fer ainsi que par l'oxydation du soufre présent sous forme de sulfures. La chaleur libérée par cette oxydation, ainsi que l'effet catalytique du fer, initie l'auto-oxydation de la matière organique contenue dans les déchets.

Les granulés de boues d'épuration étant d'excellents isolants thermiques, lors de leur stockage dans des silos de grandes dimensions la chaleur produite à l'intérieur ne peut être évacuée que faiblement par conduction, d'où une amplification de la vitesse de montée en température localement.

A 140°C, la dégradation de la cellulose catalysée par le fer trivalent Fe(III) conduit à la dévolatilisation de la matière organique accompagnée d'un dégagement important et rapide de chaleur donnant lieu à l'ignition d'un feu couvant.

Le document EP1209127 décrit un procédé d'assainissement de boues pathogènes qui utilise la chaleur issue du séchage en sortie du clarificateur pour limiter la consommation énergétique du procédé.

Le document WO 2008/106672 traite du contrôle de la température et du temps de séjour dans le traitement des boues contenant des éléments pathogènes.

Toutefois, l'enseignement des documents précités cible d'avantage l'efficacité pour éliminer les agents pathogènes et ne traite pas en priorité l'oxydation poussée des autres composants associée aux risques d'auto-échauffement. L'invention a pour but, surtout, de fournir un procédé de traitement de boues séchées de station d'épuration qui permet d'éviter, ou tout au moins de limiter, leur auto-échauffement lors d'un stockage ultérieur.

Le procédé de traitement de boues séchées de station d'épuration, selon l'invention, est caractérisé en ce que les boues sont soumises, avant stockage :
- à une oxydation contrôlée de sorte que leur température, au cours de cette oxydation, reste inférieure à un premier seuil de 100°C, et plus particulièrement comprise entre 40°C et 90°C
- et ensuite à un refroidissement à une température inférieure à un deuxième seuil de 40°C, plus bas que le premier seuil.

L'invention permet ainsi de réaliser une oxydation, notamment du fer de Fe(II) en Fe(III), à température contrôlée et d'empêcher qu'une "allumette chimique" produise suffisamment de chaleur en un endroit de la masse stockée pouvant entraîner l'ignition de la matière organique.

L'oxydation contrôlée des boues est effectuée par fluidisation à l'air, ce qui permet d'effectuer à la fois une oxydation contrôlée et un refroidissement des boues séchées. Le temps de contact air/boues est compris de préférence entre 2 min et 2 h.

Les boues sont étendues en nappe, l'air de fluidisation est introduit par zones de la nappe, et le contrôle d'oxydation est effectué selon les zones d'introduction de l'air, en particulier par mesure de la température des boues.

L'avancement de l'oxydation peut être contrôlé par le suivi de la température des boues durant leur transport sur le tapis de fluidisation. En fonction de l'évolution de la température des boues, la régulation de l'avancement de l'oxydation des boues séchées peut être effectuée par variation de l'un au moins des paramètres suivants : temps de séjour en oxydation de la boue, quantité d'air de fluidisation et sa répartition, teneur en oxygène dans l'air de fluidisation.

L'air de fluidisation, servant à l'oxydation, peut circuler en boucle fermée, avec purge et entrée d'air. En variante, l'air de fluidisation, servant à l'oxydation, circule en boucle ouverte.

L'air nécessaire à l'oxydation peut, selon les conditions climatiques, notamment dans le cas d'un environnement chaud, saturé en eau, être refroidi à l'aide d'un groupe froid ou d'un échangeur air/eau afin de contenir la température des boues en cas de nécessité.

L'invention est également relative à une installation pour la mise en œuvre du procédé défini précédemment, caractérisée en ce qu'elle comporte, en amont d'un dispositif de stockage :
- une unité d'oxydation des boues avec moyens de contrôle de l'oxydation de sorte que la température des boues reste inférieure à un premier seuil de 100°C,
- et une unité de refroidissement des boues ainsi oxydées avec moyens de contrôle du refroidissement, de sorte que la température des boues devienne inférieure à un deuxième seuil plus bas que le premier seuil.

L'installation comporte aussi des moyens de soufflage d'air sur les boues, lesquelles sont disposées en nappe sur un tapis constitué d'une membrane suffisamment poreuse à l'air et suffisamment fine pour que les boues ne puissent la traverser. Les moyens de soufflage d'air sont disposés sous le tapis pour assurer une fluidisation des boues.

Le tapis est un tapis transporteur qui assure à la fois le transport mécanique de boues et leur mise en contact avec l'air. Le parcours du tapis est divisé en plusieurs zones séparées les unes des autres, et chaque zone comporte des moyens de réglage du débit et des moyens de réglage de la température de l'air soufflé sur les boues. Chaque zone peut comporter un moyen de chauffage ou de refroidissement de l'air soufflé, en particulier un échangeur de chaleur.

En général, l'installation comporte un moyen de soufflage de l'air sur les boues, notamment un ventilateur. L'installation peut comporter un circuit en boucle fermée de l'air, avec purge et entrée d'air.

Avantageusement, l'installation comporte un moyen de mesure de la température des boues en entrée de l'installation, et dans chaque zone un moyen de mesure de la température des boues et un moyen de mesure de la température de l'air d'oxydation en sortie de la zone.

L'installation peut comporter deux circuits en boucle d'air, chaque circuit avec un ventilateur, un premier circuit étant dédié à l'oxydation des boues, l'autre circuit étant dédié au refroidissement.

De préférence, l'installation comporte un moyen de mesure de la teneur en oxygène et un moyen de mesure de la teneur en oxyde de carbone de l'air en sortie de l'installation.

Avantageusement, les moyens de mesure des différents paramètres de fonctionnement, en particulier les moyens de mesure de la température des boues, de la température de l'air, de la teneur en oxygène et oxydes de carbone, sont reliés à un automate qui commande les débits de boues, d'air et de fluides chaud et froid selon prescriptions données.

L'installation peut comporter en sortie un contrôle, dans le flux d'air, du taux de poussières, de la température, de la teneur en oxygène et en oxydes de carbone.

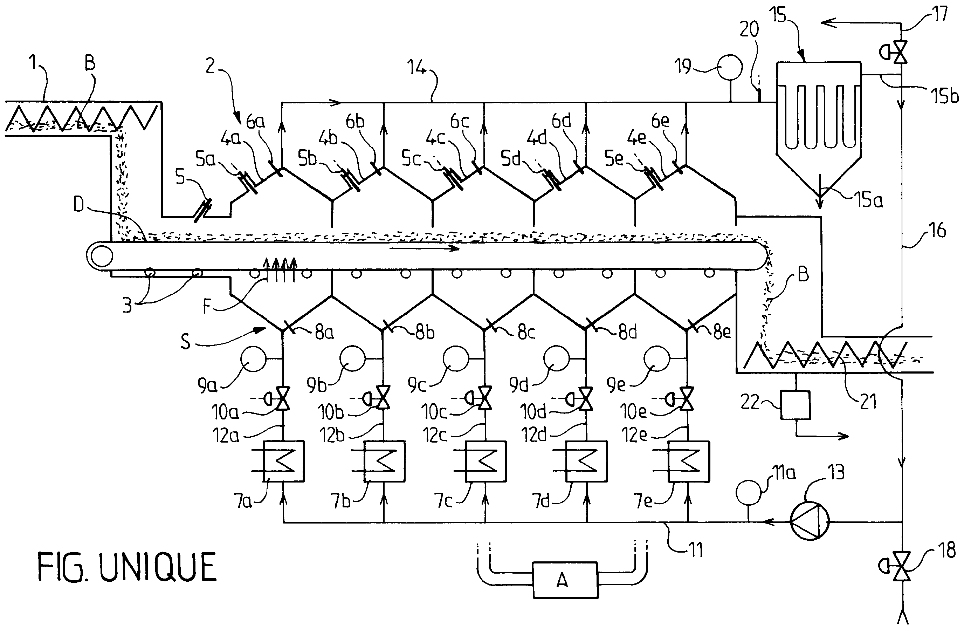

L'invention consiste, mises à part les dispositions exposées ci-dessus, en un certain nombre d'autres dispositions dont il sera plus explicitement question ci-après à propos d'un exemple de réalisation décrit avec référence au dessin annexé, mais qui n'est nullement limitatif. Sur ce dessin :
- la Figure unique est un schéma d'une installation de traitement de boues séchées pour la mise en œuvre du procédé de l'invention.

En se reportant au dessin, on peut voir que des boues séchées B de station d'épuration, sortant d'un sécheur non représenté et avant stockage final, sont transportées mécaniquement par un équipement 1, notamment du type vis d'Archimède, jusqu'à une installation 2 de traitement pour une oxydation contrôlée.

En sortie de l'équipement 1, les boues sont disposées en nappe en tombant par gravité sur un tapis transporteur D constitué d'une membrane suffisamment poreuse à l'air et suffisamment fine pour que les boues ne puissent la traverser. Le tapis D est constitué par une bande sans fin enroulée autour de deux rouleaux d'extrémité dont au moins l'un assure l'entraînement de la bande. Le brin supérieur de la bande, selon le dessin, se déplace de gauche à droite tandis que le brin inférieur se déplace en sens inverse, généralement en appui sur des galets ou cylindres rotatifs 3.

Le tapis D s'étend horizontalement à travers des caissons 4a, 4b... 4d, 4e séparés de manière relativement étanche les uns par rapport aux autres pour déterminer des zones successives, correspondant à ces caissons, et désignées par les mêmes références. Les zones successives sont traversées par le tapis D et la boue B déposée sur ce tapis.

Le nombre de caissons, et donc de zones, dépend de la nature des boues à traiter et de leur caractère auto-échauffant. Une boue particulièrement auto-échauffante nécessitera un plus grand nombre de zones d'oxydation qu'une boue peu auto-échauffante.

La température de la boue B est mesurée, de préférence à distance, en entrée de l'installation 2 par une sonde 5, notamment un pyromètre optique. Dans chaque zone correspondant aux caissons 4a... 4e, la température de la boue est également mesurée par une sonde respective 5a... 5e, notamment un pyromètre optique.

La boue B est transportée à travers les caissons à une vitesse réglable, variable selon le type de boue.

L'installation comporte des moyens de soufflage d'air S sur les boues. De préférence, les moyens de soufflage S sont disposés sous le tapis D pour le traverser de bas en haut, comme seulement illustré pour le premier caisson par les flèches F et pour assurer une fluidisation des boues. Selon une variante, dans le cas de boues très poussiéreuses, l'air pourrait être soufflé d'au-dessus, pour traverser les boues de haut en bas.

Les premiers caissons 4a, 4b, 4c rencontrés par les boues, selon leur sens de progression, sont prévus pour assurer une oxydation contrôlée des boues, de sorte que la température des boues au cours de cette oxydation reste inférieure à un premier seul, en particulier de 100°C, tandis que les caissons suivants 4d, 4e assurent un refroidissement des boues afin que la température des boues, en sortie de l'installation, soit inférieure à un deuxième seuil, en particulier inférieure à 40°C.

La température de l'air d'oxydation en sortie de chaque caisson ou zone est mesurée par une sonde 6a... 6e, notamment un thermocouple. En fonction de l'évolution de ces températures, l'air de fluidisation des premières zones d'oxydation 4a, 4b, 4c est plus ou moins réchauffé par un échangeur de chaleur 7a, 7b, 7c de tout type, à savoir à air, à eau, et plus ou moins refroidi sur les dernières zones 4d, 4e par un échangeur de chaleur refroidisseur 7d, 7e, ou un groupe froid.

La température de l'air de fluidisation, en entrée du caisson, est mesurée par une sonde, notamment un thermocouple, 8a... 8e. Le débit de l'air de fluidisation dans chaque zone est adapté par une mesure de débit, à l'aide d'un débitmètre 9a... 9e, en liaison avec une électrovalve de réglage 10a... 10e constituant un organe de réglage du débit dont l'ouverture est commandée par un automate A programmé à cet effet et qui reçoit toutes les informations sur les températures de boues et d'air, et les débits.

L'alimentation en air des différents caissons peut s'effectuer à partir d'une conduite 11 par des branchements en parallèle des différents échangeurs 7a... 7e dont les conduites de sortie pour l'air sont reliées aux entrées des caissons respectifs par des conduites 12a... 12e sur lesquelles sont installés les débitmètres 9a... 9e et les organes de réglage de débit 10a... 10e.

La mise en mouvement de l'air de fluidisation est assurée par un ventilateur 13 installé en amont sur la conduite 11. Les sorties des différents caissons sont reliées en parallèle à une conduite d'évacuation commune 14 reliée à l'entrée d'un dépoussiéreur 15, par exemple de type cyclone. Les poussières sont évacuées en partie inférieure 15a du dépoussiéreur, tandis que l'air dépoussiéré sort en partie haute par une conduite 15b. L'air peut circuler en boucle fermée, auquel cas la sortie 15b est reliée par une conduite 16 à l'aspiration du ventilateur 13. Une sortie de purge 17, munie d'une vanne, est alors prévue sur la sortie 15b, la purge étant envoyée vers une unité de traitement de l'air, tandis qu'une entrée d'air 18 prévue au voisinage de l'aspiration du ventilateur 13, permet de compenser la perte créée par une purge. En variante, l'air de fluidisation peut circuler en boucle ouverte, auquel cas la sortie 15b n'est plus reliée à la conduite 16 mais directement à une unité de traitement de l'air.

Dans le cas de la boucle fermée, le débit de la purge 17 est ajusté en fonction de la teneur en oxygène de l'air mesurée par une sonde 19 en sortie de l'installation et à l'entrée du dépoussiéreur 15.

Par sécurité, la mesure de teneur en oxygène O₂ est couplée à une mesure d'oxyde de carbone, en particulier de monoxyde de carbone CO par une sonde 20 en sortie de l'installation, pour prévenir tout début de combustion. De préférence, la mesure de teneur en oxygène O₂ est aussi couplée à une mesure du taux de poussières dans l'air pour contrôler le risque d'atmosphère explosive.

En sortie de l'installation, les boues traitées oxydées et refroidies sont reprises mécaniquement, par exemple en tombant par gravité dans un dispositif de transport mécanique 21 du type vis d'Archimède, ou par transport pneumatique, vers le dispositif de stockage, notamment un silo. Un dispositif 22 de prélèvement d'échantillons des boues en entrée du transporteur 21 permet de s'assurer que les boues sont dans un état d'oxydation suffisamment avancé.

Il est également possible de créer deux boucles d'air avec deux ventilateurs : une boucle d'air est alors prévue pour la partie "oxydante", c'est-à-dire la partie amont des zones traversées par les boues, et une boucle d'air pour la partie "refroidissante", c'est-à-dire la partie aval. Dans ce cas, la deuxième boucle est de préférence de type fermée, sans que cela ne soit imposé, tandis que la première boucle est de préférence de type ouverte, sans que cela également ne soit imposé.

En fonction de la morphologie de la boue séchée, en granulés sphériques ou en bâtonnets, et de sa granulométrie, l'épaisseur de la couche de boue sur le tapis D peut être de quelques centimètres à 50 cm afin de limiter le gradient de température de l'air et d'assurer une température d'air au-dessus du lit inférieure à 100°C. Le débit d'air peut être de 300 à 6000 m³/m² de tapis, à ajuster en fonction de la granulométrie de la boue à traiter. Le temps de contact air/boue est ajusté par la vitesse d'avance du tapis. Ce temps peut être compris entre 2 min et 2 h.

L'échangeur pour refroidir les dernières zones de l'installation peut être un échangeur de tout type : air, eau, fluide frigorigène, ou un groupe froid.

L'ensemble de l'installation est piloté par l'automate A auquel sont adressés les résultats des mesures effectuées sur les températures de la boue et de l'air aux différents endroits indiqués, ainsi que les valeurs de débit d'air et les teneurs en O₂ et oxydes de carbone. L'automate commande les organes de réglage de débit d'air 10a... 10e et les différents éléments influant sur les paramètres de fonctionnement. Pour simplifier le schéma, les liaisons entre les différents constituants de l'installation et l'automate A n'ont pas été représentées.

La fonction de l'automate A est de répartir le débit d'air ainsi que de contrôler les échangeurs 7a... 7e afin que la double mission de l'installation soit respectée :
- premièrement, oxyder les boues à une température permettant une oxydation efficace de la boue sans risque d'incendie, c'est-à-dire dans une plage de température comprise entre 40°C et 90°C en général, et inférieure à 100°C, en fonction du type de boue. De cette manière, la boue ainsi oxydée ne pourra plus, ou de manière limitée, s'auto-oxyder lors du stockage final.
- deuxièmement refroidir la boue avant le stockage final, afin de minimiser encore les éventuelles réactions d'oxydation résiduelles lors de ce stockage, ce refroidissement consistant à abaisser la température de la boue au-dessous de 40°C.

La première mission d'oxydation est principalement contrôlée par la température de la boue dans les premières zones 4a, 4b, 4c selon l'exemple considéré, la température étant augmentée ou maintenue par rapport à la température d'entrée dans l'installation.

La deuxième mission de refroidissement est contrôlée par la mesure de la température de la boue dans les dernières zones 4d, 4e.

Le fonctionnement de l'installation résulte des explications précédentes.

Les boues B séchées, contenant en général moins de 10 % d'eau en masse, notamment de 5 à 8 % d'eau, sont déversées sur le tapis D pour fournir une nappe d'épaisseur adaptée, comprise généralement entre quelques centimètres et 50 cm. En passant dans les zones successives 4a... 4e, la boue est fluidisée par l'air soufflé au-dessous de cette boue, ce qui favorise le contact entre les particules de boue et l'air soufflé.

Dans les premières zones 4a, 4b, 4c selon l'exemple considéré, l'air contribue à l'oxydation contrôlée de la boue, cet air pouvant être relativement chaud à une température comprise entre 40°C et 90°C.

Dans les zones suivantes, 4e, 4d, les boues sont refroidies par un air soufflé à plus basse température, par exemple à 20°C ou moins. La fluidisation favorise l'échange thermique entre l'air et les grains de boue.

Les boues partiellement oxydées et refroidies sont déversées par le tapis roulant D à l'entrée du dispositif transporteur 21 pour être dirigées vers le stockage, notamment dans un silo.

Les boues ainsi traitées du fait de l'oxydation contrôlée, portant essentiellement sur les matières minérales, notamment le fer, et refroidies ne pourront donner lieu à un phénomène d'auto-échauffement important, pouvant conduire à une auto-inflammation.

## Revendications

1. Procédé de traitement de boues séchées de station d'épuration, pour éviter ou limiter leur auto-échauffement lors d'un stockage ultérieur, **caractérisé en ce que** les boues sont soumises, avant stockage :
- à une oxydation contrôlée de sorte que leur température, au cours de cette oxydation, reste inférieure à un premier seuil de 100°C, et plus particulièrement comprise entre 40°C et 90°C,
- et ensuite à un refroidissement à une température inférieure à un deuxième seuil de 40°C, plus bas que le premier seuil,
l'oxydation contrôlée des boues étant effectuée par fluidisation à l'air, le temps de contact air/boues étant compris de préférence entre 2 minutes et 2 heures.
la fluidisation à l'air consistant à étendre les boues en nappe, introduire l'air de fluidisation par zones (4a, ...4e) de la nappe, et effectuer le contrôle d'oxydation selon les zones d'introduction de l'air, en particulier par mesure de la température des boues.

2. Procédé selon la revendication 1, **caractérisé en ce que** la régulation de l'avancement de l'oxydation des boues séchées est effectuée par variation de l'un au moins des paramètres suivants : temps de séjour en oxydation de la boue, quantité d'air de fluidisation et sa répartition, teneur en oxygène dans l'air de fluidisation.

3. Procédé selon la revendication 1, **caractérisé en ce que** l'air de fluidisation, servant à l'oxydation, circule en boucle fermée (11, 14, 16), avec purge (17) et entrée (18) d'air.

4. Procédé selon la revendication 1, **caractérisé en ce que** l'air de fluidisation, servant à l'oxydation, circule en boucle ouverte.

5. Installation pour la mise en œuvre d'un procédé selon la revendication 1, **caractérisée en ce qu'**elle comporte, en amont d'un dispositif de stockage :
- une unité d'oxydation (4a, 4b, 4c) des boues avec moyens de contrôle de l'oxydation de sorte que la température des boues reste inférieure à un premier seuil de 100°C,
- une unité de refroidissement (4d, 4e) des boues ainsi oxydées avec moyens de contrôle du refroidissement, de sorte que la température des boues devienne inférieure à un deuxième seuil de 40°C, plus bas que le premier seuil.
- et des moyens de soufflage d'air (S) sur les boues, lesquelles sont disposées en nappe sur un tapis (D) constitué d'une membrane suffisamment poreuse à l'air et suffisamment fine pour que les boues ne puissent la traverser,
les moyens de soufflage d'air (S) étant disposés sous le tapis (D) pour assurer une fluidisation des boues,
le tapis (D) étant un tapis transporteur qui assure à la fois le transport mécanique de boues et leur mise en contact avec l'air,
le parcours du tapis (D) étant divisé en plusieurs zones (4a, ...4e) séparées les unes des autres, et chaque zone comportant des moyens de réglage du débit (10a, ...10e) et des moyens de réglage (7a, ...7e) de la température de l'air soufflé sur les boues.

6. Installation selon la revendication 5, **caractérisée en ce que** chaque zone comporte un moyen de chauffage ou de refroidissement de l'air soufflé, en particulier un échangeur de chaleur (7a, ...7e).

7. Installation selon l'une quelconque des revendications 5 à 6, **caractérisée en ce qu'**elle comporte un moyen de soufflage (S) de l'air sur les boues, notamment un ventilateur (13).

8. Installation selon l'une quelconque des revendications 5 à 7, **caractérisée en ce qu'**elle comporte un circuit en boucle fermée de l'air (11, 14, 16), avec purge (17) et entrée d'air (18).

9. Installation selon l'une quelconque des revendications 5 à 8, **caractérisée en ce qu'**elle comporte un moyen de mesure (5) de la température des boues en entrée de l'installation, et dans chaque zone un moyen de mesure (5a, ...5e) de la température des boues et un moyen de mesure (6a,...6e) de la température de l'air d'oxydation en sortie de la zone.

10. Installation selon l'une quelconque des revendications 5 à 9, **caractérisée en ce qu'**elle comporte deux circuits en boucle d'air, chaque circuit avec un ventilateur, un premier circuit étant dédié à l'oxydation des boues, l'autre circuit étant dédié au refroidissement.

11. Installation selon l'une quelconque des revendications 5 à 10, **caractérisée en ce qu'**elle comporte un moyen de mesure (19) de la teneur en oxygène et un moyen de mesure (20) de la teneur en oxyde de carbone de l'air en sortie de l'installation.

12. Installation selon l'une quelconque des revendications 5 à 11, **caractérisée en ce que** les moyens de mesure des différents paramètres de fonctionnement, en particulier les moyens de mesure de la température des boues, de la température de l'air, de la teneur en oxygène et oxydes de carbone, sont reliés à un automate (A) qui commande les débits de boues, d'air et de fluides chaud et froid selon prescriptions données.

13. Installation selon l'une quelconque des revendications 5 à 12, **caractérisée en ce qu'**elle comporte en sortie un contrôle, dans le flux d'air, du taux de poussières, de la température, de la teneur en oxygène et en oxydes de carbone.

## Patentansprüche

1. Verfahren zur Behandlung von getrocknetem Schlamm aus einer Kläranlage, um dessen Selbsterhitzung bei einer späteren Lagerung zu vermeiden oder zu begrenzen,
**dadurch gekennzeichnet, dass**
der Schlamm, vor Lagerung, Folgendem unterzogen wird:
- einer kontrollierten Oxidation, in der Form, dass seine Temperatur, im Laufe dieser Oxidation, kleiner bleibt als ein erster Schwellwert in Höhe von 100 °C, und insbesondere zwischen 40 °C und 90 °C beträgt,
- und dann einer Abkühlung auf eine Temperatur, die kleiner ist als ein zweiter Schwellwert in Höhe von 40 °C, der niedriger ist als der erste Schwellwert,
wobei die kontrollierte Oxidation des Schlamms durch Aufwirbelung an der Luft erfolgt, wobei die Luft-/Schlamm-Kontaktzeit bevorzugt zwischen 2 Minuten und 2 Stunden beträgt, wobei die Aufwirbelung an der Luft darin besteht, den Schlamm mattenförmig auszubreiten, Aufwirbelungsluft pro Zonen (4a, ... 4e) der Matte einzubringen und die Oxidationskontrolle gemäß den Lufteinbringungszonen durchzuführen, insbesondere durch Messen der Temperatur des Schlamms.

2. Verfahren nach Anspruch 1,
**dadurch gekennzeichnet, dass**
die Regelung des Fortschreitens der Oxidation des Schlamms durch Veränderung wenigstens eines der folgenden Parameter erfolgt: Verweildauer des Schlamms in Oxidation, Menge an Aufwirbelungsluft und deren Verteilung, Sauerstoffgehalt in der Aufwirbelungsluft.

3. Verfahren nach Anspruch 1,
**dadurch gekennzeichnet, dass**
die Aufwirbelungsluft, die der Oxidation dient, im geschlossenen Kreislauf (11, 14, 16) zirkuliert, mit Entlüftung (17) und Lufteinlass (18).

4. Verfahren nach Anspruch 1,
**dadurch gekennzeichnet, dass**
die Aufwirbelungsluft, die der Oxidation dient, im offenen Kreislauf zirkuliert.

5. Anlage zur Durchführung eines Verfahrens nach Anspruch 1,
**dadurch gekennzeichnet, dass**
sie, vor einer Lagervorrichtung, aufweist:
- eine Einheit zum Oxidieren (4a, 4b, 4c) des Schlamms mit Mitteln zur Kontrolle der Oxidation in der Form, dass die Temperatur kleiner bleibt als ein erster Schwellwert in Höhe von 100 °C,
- eine Einheit zum Abkühlen (4d, 4e) des auf diese Weise oxidierten Schlamms mit Mitteln zur Kontrolle der Oxidation in der Form, dass die Temperatur kleiner wird als ein zweiter Schwellwert in Höhe von 40 °C, der niedriger ist als der erste Schwellwert,
- und Mitteln zum Einblasen von Luft (S) auf den Schlamm, der mattenförmig auf einer Matte (D) angeordnet ist, die von einer Membran gebildet ist, die ausreichend luftdurchlässig und ausreichend fein ist, damit der Schlamm sie nicht durchfließen kann,
wobei die Mittel zum Einblasen von Luft (S) unter der Matte (D) angeordnet sind, um eine Aufwirbelung des Schlamms zu bewirken,
wobei die Matte (D) ein Förderband ist, das gleichzeitig den mechanischen Transport von Schlamm und dessen Inkontaktbringen mit der Luft bewirkt,
wobei der Laufweg der Matte (D) in mehrere Zonen (4a, ... 4e) unterteilt ist, die voneinander getrennt sind, und wobei jede Zone Mittel zum Regeln der Durchflussmenge (10a, ...10e) und Mittel zum Regeln (7a, ... 7e) der Temperatur der auf den Schlamm eingeblasenen Luft aufweist.

6. Anlage nach Anspruch 5,
**dadurch gekennzeichnet, dass**
jede Zone ein Mittel zum Aufheizen oder zum Abkühlen der eingeblasenen Luft aufweist, insbesondere einen Wärmetauscher (7a, ... 7e).

7. Anlage nach einem der Ansprüche 5 bis 6,
**dadurch gekennzeichnet, dass**
sie ein Mittel zum Einblasen (S) von Luft auf den Schlamm aufweist, insbesondere einen Lüfter (13).

8. Anlage nach einem der Ansprüche 5 bis 7,
**dadurch gekennzeichnet, dass**
sie einen geschlossenen Luftkreislauf (11, 14, 16) aufweist, mit Entlüftung (17) und Lufteinlass (18).

9. Anlage nach einem der Ansprüche 5 bis 8,
**dadurch gekennzeichnet, dass**
sie ein Mittel zum Messen (5) der Temperatur des Schlamms am Eingang der Anlage und in jeder Zone ein Mittel zum Messen (5a, ... 5e) der Temperatur des Schlamms und ein Mittel zum Messen (6a, ... 6e) der Temperatur der Oxidationsluft am Ausgang der Zone aufweist.

10. Anlage nach einem der Ansprüche 5 bis 9,
**dadurch gekennzeichnet, dass**
sie zwei Luftkreisläufe aufweist, jeder Kreislauf mit einem Lüfter, wobei ein erster Kreislauf der Oxidation des Schlamms gewidmet ist, wobei der andere der Abkühlung gewidmet ist.

11. Anlage nach einem der Ansprüche 5 bis 10,
**dadurch gekennzeichnet, dass**
sie ein Mittel zum Messen (19) des Gehalts an Sauerstoff und ein Mittel zum Messen (20) des Gehalts an Kohlenmonoxid der Luft am Ausgang der Anlage aufweist.

12. Anlage nach einem der Ansprüche 5 bis 11,
**dadurch gekennzeichnet, dass**
die Mittel zum Messen der verschiedenen Betriebsparameter, insbesondere die Mittel zum Messen der Temperatur des Schlamms, der Temperatur der Luft, des Gehalts an Sauerstoff und an Kohlenmonoxid, mit einer Steuerung (A) verbunden sind, welche die Durchflussmengen von Schlamm, von Luft und von heißem und kaltem Fluid gemäß bestimmten Vorgaben steuert.

13. Anlage nach einem der Ansprüche 5 bis 12,
**dadurch gekennzeichnet, dass**
sie am Ausgang eine Kontrolle, in dem Luftstrom, des Anteils an Staub, der Temperatur, des Gehalts an Sauerstoff und an Kohlenmonoxid aufweist.

## Claims

1. Process for treating dried sludge from wastewater treatment plants, to avoid or limit their self heating during subsequent storage, **characterized in that** the sludge is subjected, before storage:
- to a controlled oxidation so that their temperature, during this oxidation, remains below a first threshold of 100 °C, and more particularly between 40 °C and 90 °C,
- and then to cooling to a temperature below a second threshold of 40 °C, lower than the first threshold,
the controlled oxidation of the sludge being carried out by air fluidization, the air / sludge contact time being preferably between 2 minutes and 2 hours,
the fluidizing air consisting of spreading of sewage sludge, of introducing the fluidizing air through zones (4a, ...4e) of the web, and of carrying out the oxidation control according to the introduction zones of the air, in particular by measuring the temperature of the sludge.

2. Method according to claim 1, **characterized in that** the regulation of the progress of the oxidation of the dried sludge is carried out by variation of at least one of the following parameters : residence time in oxidation of the sludge, quantity of fluidizing air and its distribution, oxygen content in the fluidizing air.

3. Method according to claim 1, **characterized in that** the fluidizing air, used for oxidation, circulates in a closed loop (11, 14, 16), with purge (17) and air inlet (18).

4. Method according to claim 1, **characterized in that** the fluidizing air, used for oxidation, circulates in an open loop.

5. Plant for implementing a method according to claim 1, **characterized in that** it comprises, upstream of a storage device:
- an oxidation unit (4a, 4b, 4c) of the sludge with oxidation control means so that the temperature of the sludge remains below a first threshold of 100° C.,
- a cooling unit (4d, 4e) for the sludges thus oxidized with means for controlling the cooling, so that the temperature of the sludge falls below a second threshold of 40 °C, lower than the first threshold,
- and air blowing means (S) on the sludge, which are arranged in a sheet on a mat (D) constituted by a membrane which is sufficiently porous to the air and sufficiently fine so that the sludge cannot pass through it,
the air blowing means (S) being arranged under the belt (D) to ensure fluidization of the sludge,
the belt (D) being a conveyor belt which ensures both the mechanical transport of sludge and their bringing into contact with air,
the path of the belt (D) being divided into several zones (4a, ....4e) separated from each other, and each zone comprising means for adjusting the flow rate (10a, ... 10 e) and means for adjustment (7a, ... 7e) of the temperature of the air blown onto the sludge.

6. Installation according to claim 5, **characterized in that** each zone comprises a means for heating or cooling the blown air, in particular a heat exchanger (7a, ... 7e).

7. Installation according to any one of claims 5 to 6, **characterized in that** it comprises a blowing means (S) of the air on the sludge, in particular a fan (13).

8. Installation according to any one of claims 5 to 7, **characterized in that** it comprises a closed-loop air circuit (11, 14, 16), with purge (17) and air inlet (18).

9. Installation according to any one of claims 5 to 8, **characterized in that** it comprises a measuring means (5) of the temperature of the sludge entering the installation, and in each zone a measuring means (5a, ... 5e) of the temperature of the sludge and a means of measurement (6a, ... 6e) of the temperature of the oxidation air leaving the zone.

10. Installation according to any one of claims 5 to 9, **characterized in that** it comprises two circuits in the air loop, each circuit with a fan, a first circuit being dedicated to the oxidation of sludge, the other circuit being dedicated to cooling.

11. Installation according to any one of claims 5 to 10, **characterized in that** it comprises a measuring means (19) of the oxygen content and a measuring means (20) of the carbon monoxide content of the air leaving the installation.

12. Installation according to any one of claims 5 to 11, **characterized in that** the means for measuring the various operating parameters, in particular the means for measuring the temperature of the sludge, the air temperature, the content of oxygen and carbon oxides, are connected to a robot (A) which controls the flow rates of sludge, air and hot and cold fluids according to predetermined prescriptions.

13. Installation according to any one of claims 5 to 12, **characterized in that** it comprises, at the outlet, a control, in the air flow, of the rate of dust, of the temperature, of the oxygen and oxide content of carbon.
